# EUROPEAN PATENT APPLICATION

(11) **EP 3 454 607 A1**
(43) Date of publication of application: **13.03.2019**
(21) Application number: 17190661.3
(22) Date of filing: 12.09.2017
(51) Int. Cl.: H04W 52/02

(54) **SELF-POWERED INTERNET-OF-THINGS SENSOR DEVICE**

(71) Applicant: Koninklijke Philips N.V., 5656 AE Eindhoven (NL)
(72) Inventor: VAN VUGT, Henricus Antonius Gerardus, 5656 AE Eindhoven (NL)
(74) Representative: de Haan, Poul Erik

(57) **Abstract**

A self-powered Internet-of-Things sensor device (100) is provided which comprises a wireless network unit (140) configured to enable a communication in a Low-Power Wide-Area Network (LPWAN), an energy converting unit (150) configured to convert a first parameter into energy, and an energy harvesting unit (110) configured to harvest energy from the energy converted by the energy converting unit (150), and to initiate a sending of a message via the wireless network unit (140) every time a predetermined amount of energy is harvested by the energy harvesting unit (110).

## Description

### FIELD OF THE INVENTION

The invention relates to a Self-powered Internet-of-Things sensor device as well as a method of measuring parameters with a Self-powered Internet-of-Things sensor device.

### BACKGROUND OF THE INVENTION

IoT (Internet of Things) sensor devices are widely used and typically comprise a battery. However, the lifetime of such a sensor device will depend on the capacity and thus the lifetime of the battery. If the battery does not contain any energy anymore, the sensor will stop functioning, unless being serviced (battery replacement). Furthermore, the dimensions of the battery also have a great influence on the dimensions of the sensor device. Such sensor devices will in the short future typically be part of a low-power wide-area network LPWAN. A sensor device typically comprises a LPWAN node to enable a communication with the LPWAN.

For environmental reasons as well as for improving the lifetime of an IoT (Internet-of-Things) sensor device, it is desirable to have sensor devices which can operate without a dedicated battery. If a battery can be avoided in the sensor device, then the recycling of such a sensor device is much more environmentally friendly. Moreover, with battery-less IoT sensors, it can be avoided that devices with batteries remain in place even if the life time of the battery has ended. Furthermore, the lifetime of the sensor device can also be increased.

US 2017/0147021 A1 describes an IoT (Internet-of-Things) system having IoT devices which do not contain batteries. The IoT devices comprise energy harvesting devices which harvest energy for example by means of a photo diode. The IoT device can comprise a detector which is operated based on the harvested energy.

### SUMMARY OF THE INVENTION

It is an object of the present invention to provide a Self-powered Internet-of-Things sensor device that is self powered and which has an increased lifetime and allows a low power operation.

According to an aspect of the invention, a Self-powered Internet-of-Things sensor device is provided. The sensor device comprises an energy converting unit to convert a first parameter into energy. The sensor device also comprises an energy harvesting unit to harvest energy associated to the first parameter and which has been converted by the energy converting unit. The sensor device also comprises a wireless network unit for enabling a communication in a low power wide area network LPWAN. Furthermore, a sending of a message via the wireless network unit is initiated every time a first amount of energy has been harvested by the energy harvesting unit. For example, if the first sensor is detecting a light intensity, then the energy harvesting unit will harvest energy by means of a photo detector. A message is sent via the wireless network unit when enough energy (a first amount of energy) has been harvested, i.e. enough energy has been harvested to send out one radio message. In other words, the message itself indicates that an amount of energy has been harvested and thus directly relates to the measured parameter. In other words, the message does not need to contain any data. The message itself indicates that an amount of energy has been harvested.

According to an aspect of the invention, an energy storage unit is provided which is used to store energy harvested by the energy harvesting unit. The energy harvesting unit is furthermore adapted to supply a predetermined amount of energy stored in the energy storage unit to the wireless network unit to enable the wireless network unit to send a message.

According to a further aspect of the invention, the energy harvesting unit comprises a first converter unit configured to convert a voltage level at an output of the energy converting unit to a voltage level required by the energy storage unit. The energy harvesting unit furthermore comprises a comparator configured to compare the voltage at the energy storage unit to a threshold and to control the switch to supply energy to the wireless network unit to enable a sending of a message.

According to a further aspect of the invention, the energy harvesting unit furthermore comprises a second converter unit configured to convert a voltage level in the energy storage unit to a voltage level required by the wireless network unit.

According to still a further aspect of the invention, the wireless network unit comprises a microprocessor which is configured to store a sequence counter of messages which have been sent.

According to a further aspect of the invention, the energy converting unit can be implemented as a photo detector or a piezo-electric element.

According to a further aspect of the invention, a method of controlling a self-powered Internet-of-Things sensor device is provided. A first parameter is converted into an electrical energy by an electrical energy converting unit. Energy which has been converted by the energy converting unit is harvested by an energy harvesting unit. A message is sent via the wireless network unit every time a predetermined amount of energy has been harvested.

According to a further aspect of the invention, a sequence counter is provided which is incremented for every message sent by the wireless network unit.

According to a further aspect of the inventions, a data rate is adapted by decreasing or increasing a number of messages sent by the wireless network unit.

The sensor device according to an aspect of the invention is a wireless and batteryless sensor device which can communicate within a low-power wide-area network LPWAN. The harvested energy is the same type as the energy which is monitored. Once the harvested energy corresponds to a threshold or when an amount of energy has been harvested, then a first message is sent via the wireless network unit. As soon as the harvested energy again corresponds to the threshold, then a second message is sent via the wireless network unit. The measured value of the parameter will then correspond to the number of messages sent via the wireless network, i.e. the parameter will then correspond to the number of times, an amount of energy has been harvested. The LPWAN messages can have timestamp information and position information.

The messages sent by the sensor device can contain a sequence count value that is incremented with every message sent.

Accordingly, when a message is lost, the receiving unit will still know how much energy has been harvested in total, resulting in a correct measurement. Hence, only time information may be lost in this situation when a message is lost.

It shall be understood that a preferred embodiment of the present invention can also be any combination of the dependent claims or above embodiments with the respective independent claim.

These and other aspects of the invention will be apparent from and elucidated with reference to the embodiments described hereinafter.

### BRIEF DESCRIPTION OF THE DRAWINGS

In the following drawings:
Fig. 1A shows a schematic block diagram of a sensor device according to a first aspect of the invention,
Fig. 1B shows a graph of a time diagram of an energy harvesting procedure according to an aspect of the invention,
Fig. 2 shows a schematic representation of the operation of a sensor unit according to an aspect of the invention, and
Fig. 3 shows an illustration of an energy harvesting procedure according to an aspect of the invention.

### DETAILED DESCRIPTION OF THE EMBODIMENTS

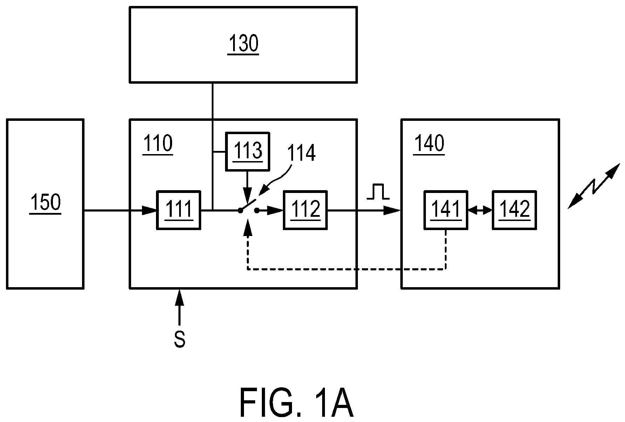

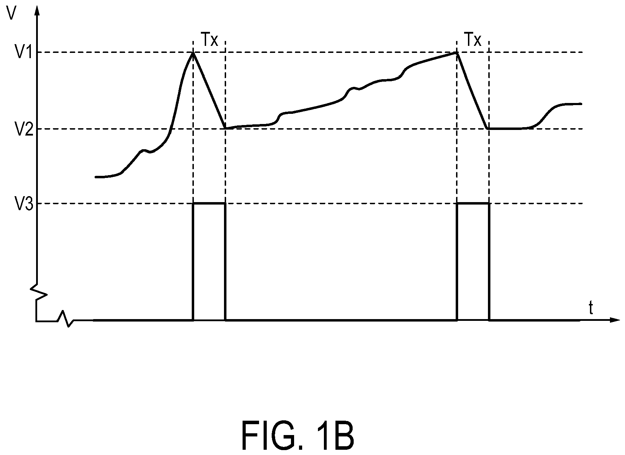

Fig. 1 shows a schematic block diagram of a sensor device according to a first aspect of the invention. The sensor device 100 according to an aspect of the invention is a Self-powered Internet-of-Things (IoT) sensor device 100 which can be part of a Low-Power Wide-Area Network LPWAN. The sensor device 100 comprises an energy harvesting unit 110, an energy storage unit 130 (i.e. a super capacitor), a wireless network unit 140 and an energy converting unit 150 (i.e. an energy converter). The sensor device 100 can wirelessly communicate with the LPWAN via the wireless network unit 140.

The energy collecting unit 150 can detect a parameter like light and convert the parameter into electrical energy. Therefore, the energy converting unit can for example be embodied as a photo detector 150 or a piezo-electric element converting kinetic energy in electrical energy. The energy harvesting unit 110 is harvesting energy which is associated to the first parameter. For example, if the energy converting unit 150 is a photo detector, the energy harvesting unit 110 will harvest energy by means of a conversion of light to electrical energy. This can for example be performed by means of the energy converting unit 150 (in form of a photo detector).

When the energy harvested by the energy harvesting unit 100 corresponds to a first threshold or amount, then a first message is send via the wireless network unit 140. In other words, this message will indicate that energy corresponding to the first threshold or amount has been harvested by the energy harvesting unit 110. If thereafter the energy harvesting unit 110 has harvested energy which corresponds to the first amount again, a further message is send via the wireless network unit 140. At the reception side in the Low Power Wide Area Network LPWAN, a receiver can receive the messages which are wirelessly transmitted by means of the wireless network unit 140. The wireless network 140 can comprise a microprocessor 141 and a radio module 142.

The energy harvesting unit 110 comprises a circuit which enables the charging of the energy storage unit by the energy harvested by the energy collecting unit and furthermore to supply energy for the wireless network unit 140 to send a message.

In particular, the energy harvesting unit 110 may comprises a boost charger 111, a buck converter 112, a comparator 113 and a switch 114. The boost charger 111 receives the output of the energy converting unit 150 and can convert a voltage level of the output of the energy converting unit 150 to a voltage level which is required for the energy storage unit 130. The comparator 113 monitors the voltage level at the energy storage unit 130. If the voltage level at the energy storage 130 corresponds to a threshold then the comparator can control the switch 114 such that energy from the energy storage 130 can be converted by the buck converter 112 to a voltage level required by the wireless network unit 140. If the wireless network has been supplied with sufficient energy to send a message, the switch 114 can be switched off. The switching off can for example be performed by the microprocessor 141 of the wireless network unit 140.

Optionally, the energy harvesting unit 110 may comprise inputs for receiving settings. These inputs can also be used to couple a resistor network to the energy harvesting unit 110.

Optionally, a sensor 170 can be provided which can be adapted to measure or detect a further parameter.

At the receiver side in the network, timestamp information and position information can be generated. As the receiver side can associate a timestamp to any incoming messages, the timestamp information of the message is available. Position information of the sensor device can be obtained at the receiver side by triangulation. If multiple antennas received the same message, the location of the sensor device can be determined.

Fig. 1B shows a graph of a time diagram of an energy harvesting procedure according to an aspect of the invention. In Fig. 1B the voltage V1, V2 at the energy storage 130 and the voltage V3 at the input of the wireless network unit 140 are depicted. The voltage V3 corresponds to the voltage at the input of the wireless network unit. The voltage V1 corresponds to the voltage level when sufficient energy has been stored in the energy storage unit 130 to enable the wireless network unit 140 to transmit a message. The voltage level V2 corresponds to the voltage level at the energy storage unit 130 when a message has been sent by the wireless network unit 140. When the message has been sent Tx then the voltage level at the energy storage unit drops from V1 to V2. Thereafter, the voltage level at the energy storage unit 130 is increasing due to the energy harvested by the energy collecting unit 150. As soon as the voltage level in the energy storage unit 130 reaches the voltage level V1, the energy harvesting unit 110 provides energy to the wireless network unit 140 to send a message. During the sending of the message via the wireless network unit 140 the voltage level at the energy storage unit 130 drops from V1 to V2.

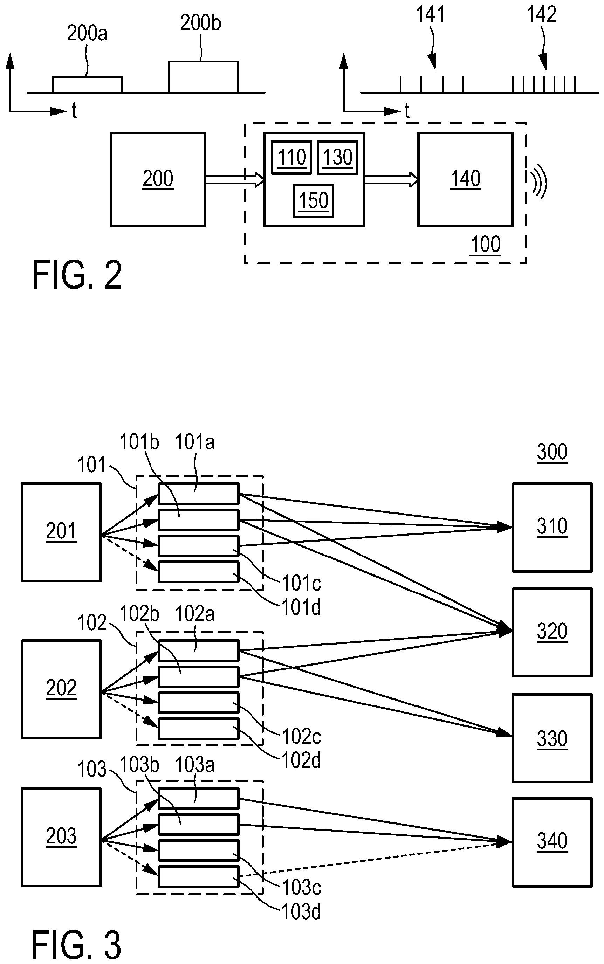

Fig. 2 shows a schematic representation of the operation of a sensor device according to an aspect of the invention. In Fig. 2, the sensor device 100 is divided into two functional blocks, namely one block related to the energy gathering and a second block relating to the wireless network unit. In the first block, the energy harvesting unit 110, the energy storage unit 130 and the energy converting unit 150 are provided. The wireless network unit 140 can communicate to a low power wide area network. The energy 200 (which is to be harvested) is harvested by the energy harvesting unit 110. In Fig. 2 (as an example), two different energy amounts 200a, 200b are harvested. According to the invention, the sensor device 100 will output four messages 141, i.e. each time when the first amount of energy 201 has been harvested. The sensor device is continuously harvesting energy. When the second amount of energy 202 is harvested, the sensor device will output seven messages 142. As can be seen from Fig. 2, the distance between the messages 141 is much larger than the distance between the messages 142.

As the energy level during time period 200b is higher than during time period 200a the sensor device 100 will send more messages. If no messages are sent then there is no energy which can be harvested. In other words, the absence of messages may also relate to valuable information as it will indicate that, for example there is no light or genetic energy.

The operation of the sensor device according to an aspect of the invention can be described as follows: As soon as a bucket of energy is full, the sensor device will sent a message. Due to the sending the bucket is (partially) emptied and as soon as the bucket is full again, a further message is sent. If more energy is present, the filling of the bucket will be faster (as with the messages 142). However, if the energy level is less, then the filling of the bucket will take more time (see messages 141).

According to an aspect of the invention, the parameter which is to be sensed by the sensor device 100 corresponds or relates to the energy which is harvested and vice versa. If for example the energy converting unit 150 is a photo detector, then the photo detector can detect light and convert the light into electrical energy. As soon as a first amount of electrical energy has been converted by the photo detector, a message is sent from the sensor device 100. This message indicates that a first amount of energy has been converted by the photo detector, i.e. a first amount of light has been detected. This process can be an iterative process such that the sensor device 100 can send a number of messages. This is advantageous as the message will not contain a value but the occurrence of messages over time (i.e. number of messages over time) indicate the parameter which is monitored. Thus, a robust and low complex sensor device is provided within an internet-of-things system.

The wireless network unit 140 can comprise a microprocessor 141 and a radio module 142. As soon as the energy harvesting unit 110 has harvested sufficient energy, the microprocessor 141 and the radio module 142 in the wireless network unit 140 are activated to send a first radio frequency RF message. In other words, the energy harvesting unit 110 will provide sufficient energy for the wireless network unit 140 to send the RF message. The microprocessor 141 may be adapted to process an algorithm which will send out 1 RF message as soon as sufficient energy is provided. The control unit 120 can then initiate a deep sleep of the wireless network unit 140.

According to an aspect of the invention, the size of the 1 RF message is minimized to prevent unnecessary power consumption.

According to an aspect of the invention, if more energy is harvested than required for a sending of the RF message, the extra amount of energy can be used to measure additional parameters. Hence, further sensors 170 may be present in the sensor device 100. For example, if light is used to harvest energy, then ultraviolet light may be detected with the extra amount of harvested energy.

According to a further aspect of the invention, an additional accuracy can be provided by writing energy bits into a non-volutile memory of the microprocessor inside the wireless network unit, if sufficient energy has been harvested by the energy harvesting unit 110. This can in particular be performed if the amount of energy harvested by the energy harvesting unit 110 is not sufficient to allow a transmittance of the RF message. If sufficient energy has been harvested by the energy harvesting unit, then a collected number of bits can be communicated wirelessly.

Fig. 3 shows an illustration of an energy harvesting procedure according to an aspect of the invention. Fig. 3 illustrates that different energy sources can be harvested for different applications. A first energy harvesting procedure 101 can extract electrical energy from kinetic energy. Hence, the sensor device 100 according to Fig. 1A can be used. Accordingly, the first energy harvesting procedure 101 can transmit a number of messages 101a which correspond to the amount of harvested kinetic energy. The number of messages transmitted 101a can be used by an activity unit 310 to determine the activity of a user.

A second energy harvesting procedure 102 may use the sensor device 100 according to Fig. 2. The second energy harvesting procedure 102 uses the available light 202 to harvest energy by means of the energy harvesting unit 110 and send a number of messages 102a via the wireless network unit 140. The information of the number of messages 102a from the second energy harvesting procedure 102 as well as optionally together with the number of messages from the first sensor device 101 can be used by a sleep unit 320 to determine the sleep quality of a user.

Furthermore, the information on the number of messages and the corresponding timestamps may be used by an anti-depression application 330 which has the received amount of daylight as input.

A third energy harvesting procedure 103 uses ultraviolet light to extract energy by means of the energy harvesting unit 110. The third energy harvesting procedure 103 can use a sensor device 100 according to Fig. 2. Therefore, the number of messages 103a sent by the energy harvesting procedure 103 corresponds to the amount of ultraviolet light. This information together with corresponding timestamps can be used by an ultraviolet protection unit 340 to determine an ultraviolet protection of a user in other words to help the user to avoid sunburns etc. Optionally, extra sensors may be provided. The information of the sensors may also be forwarded to the ultraviolet protection unit. Alternatively, the third energy harvesting procedure can harvested light like daylight and can use an additional sensor to give a UV indication. The messages which are send can contain an UV indication.

According to the invention, the sensor devices are batteryless sensor devices and can thus also be incorporated into healthcare applications and can be used or worn by the user. Such sensor device may be incorporated into watches or jewelry or shoes or the like. For example, if a sensor device is incorporated into a shoe, it may be able to measure the activity of a user. Alternatively, if a sensor device is implemented in jewelry such as a ring or a watch, daylight or ultraviolet light levels may be measured.

According to an aspect of the invention, a piezo electric component may be used as energy collecting unit to extract electrical energy from the kinetic energy.

According to a further aspect of the invention, the sensor device may be used to measure light and can be implemented or attached to a plant in order to determine whether the plant has sufficient light. Optionally, the sensor device may also have a humidity detection unit to determine the humidity of the soil of the plant also in order to determine whether the plant has sufficient water. A number of messages which are received by a receiver side in the wireless network can allow a determination whether or not the light levels are okay and/or whether or not the humidity levels are okay. The sensor device according to the invention is operated as a measuring device. The receiver side in the wireless network can further process the received information.

According to an aspect of the invention, a sensor device may be implemented in a street light in order to determine the outside light and thus control the light of the street light.

According to a further aspect of the invention, a sensor device can also be implemented in a street light to determine whether the street light is emitting light. If the sensor device does not transmit messages, then it is clear that the street light does not work as required.

According to a further aspect of the invention, the sensor device can be used to detect an alternating magnetic field around main wires to measure or determine a power consumption of a device. The sensor device according to the invention may use the alternating magnetic field to extract electrical energy and to operate the sensor device.

According to a further aspect of the invention, the messages may contain a sequence counter which can be incremented for every message is sent. The sequence counter may be stored in the non-volatile memory of the microprocessor 141. This is advantageous as even if some of the messages which are sent by the sensor device 100 is lost during the transmission then in any of these subsequent messages, the sequence count will contain the required information such that no information is lost.

According to a further aspect of the invention, an automatic data-rate adjustment can be performed at the receiver side of the wireless network. The receiver side of the network can instruct the sensor device to decrease the number of messages by a factor (for example 2) if the sequence counter is continuously incremented by more than one. This can indicate that the amount of energy which corresponds to a forwarding of a message is to small. Therefore, the sensor device may be adapted to send a message, only if the voltage level in the energy storage has reach the first amount twice. In other words, some of the messages which are supposed to be sent can be dropped.

According to a further aspect of the invention, downlink messages may be provided. These downlink messages may require more energy than just sending uplink messages.

According to a further aspect of the invention, a sequence counter can be incremented regardless whether or not an RF message is sent.

According to a further aspect of the invention, kinetic energy can be harvested for example by means of a piezo electric unit as energy collecting unit. This can be used for human activity monitoring and/or in the tracking of a route of a walk or a run.

According to a further aspect of the invention, a shoe replacement procedure can be implemented by determining a shoe wear out or an end-of-life of running shoes by harvesting kinetic energy.

According to a further aspect of the invention, a light can be harvested and can be used for plant health monitoring (optionally with a sensing of soil humidity) and low-cost crop monitoring (optionally with a sensing of soil humidity).

According to a further aspect of the invention, kinetic energy can be harvested for use in industrial flow monitoring.

While the invention has been illustrated and described in detail in the drawings and forgoing description, such illustration and description are to be considered illustrative and exemplary and not restrictive; the invention is not limited to the disclosed embodiments. Other variations of the disclosed embodiments can be understood and effected by those skilled in the art in practicing the claimed invention, from a study of the drawings, the disclosure and the claims.

In the claims, the word "comprising" does not exclude other elements or steps and the infinite article "a" or "an" do not exclude a plurality. A single element or unit may fulfill the functions of several items recited in the claims. The mere fact that certain measures are recited in mutual different independent claims does not indicate that a combination of these measures cannot be used to advantage.

The reference signs in the claims should not be construed as limiting the scope.

## Claims

1. Self-powered Internet-of-Things sensor device (100), comprising
a wireless network unit (140) configured to enable a communication in a Low-Power Wide-Area Network (LPWAN),
an energy converting unit (150) configured to convert a first parameter into energy, and
an energy harvesting unit (110) configured to harvest energy from the energy converted by the energy converting unit (150), and to initiate a sending of a message via the wireless network unit (140) every time a predetermined amount of energy is harvested by the energy harvesting unit (110).

2. Self-powered Internet-of-Things sensor device (100) according to claim 1, further comprising
an energy storage unit (130) configured to store energy harvested by the energy harvesting unit (110),
wherein the energy harvesting unit (110) is configured to supply a predetermined amount of energy stored in the energy storage unit (130) to the wireless network unit (140) to send a message.

3. Self-powered Internet-of-Things sensor device (100) according to claim 2, wherein
the energy harvesting unit (110) comprises a first converting unit (111) configured to convert a voltage level at an output of the energy converting unit (150) to a voltage level required by the energy storage unit (130), and
comparator (113) configured to compare the voltage at the energy storage unit to a threshold and to control a switch (114) to supply energy to the wireless network unit (140) to enable a sending of the message.

4. Self-powered Internet-of-Things sensor device (100) according to claim 3,
wherein the energy harvesting unit (110) furthermore comprises a second converter unit (112) configured to convert a voltage level in the energy storage unit (130) to a voltage level required by the wireless network unit (140).

5. Self-powered Internet-of-Things sensor device (100) according to claim 1, wherein
the wireless network unit (140) comprises a microprocessor (141), wherein the microprocessor (141) is configured to store a sequence counter of messages which have been sent.

6. Self-powered Internet-of-Things sensor device (100) according to claim 1, wherein
the energy converting unit (150) is a photo detector or a piezo-electric element.

7. Method of controlling a self-powered Internet-of-Things sensor device (100), comprising the steps of:
converting a first parameter into an electrical energy by an electrical converting unit (150):
harvesting energy from the energy converted by the energy converting unit (150); and
sending a message via a wireless network unit (140) every time a predetermined amount of energy is harvested.

8. Method of controlling a self-powered Internet-of-Things sensor device (100) according to claim 7, further comprising the step of:
providing a sequence counter which is incremented for every message sent by the wireless network unit (140).

9. Method of controlling a self-powered Internet-of-Things sensor device (100) according to claim 7, further comprising the step of:
adapting a data rate by decreasing a number of messages sent by the wireless network unit (140).
